# EUROPÄISCHE PATENTSCHRIFT

(11) **EP 2 701 937 B1**
(45) Veröffentlichungstag und Bekanntmachung des Hinweises auf die Patenterteilung: **28.09.2016**
(21) Anmeldenummer: 12716245.1
(22) Anmeldetag: 16.04.2012
(51) Int. Cl.: B60K 26/00, B60K 6/00

(54) **BEDIENEINRICHTUNG ZUR STEUERUNG DES BETRIEBS EINES EINEN ELEKTROMOTOR UMFASSENDEN KRAFTFAHRZEUGS UND KRAFTFAHRZEUG**
OPERATING DEVICE FOR CONTROLLING THE OPERATION OF A MOTOR VEHICLE COMPRISING AN ELECTRIC MOTOR, AND MOTOR VEHICLE
DISPOSITIF DE COMMANDE POUR COMMANDER LE FONCTIONNEMENT D'UN VÉHICULE AUTOMOBILE ÉQUIPÉ D'UN MOTEUR ÉLECTRIQUE ET VÉHICULE AUTOMOBILE

(30) Priorität: 28.04.2011 DE 102011018875
(43) Veröffentlichungstag der Anmeldung: 05.03.2014
(73) Patentinhaber: Audi AG, 85045 Ingolstadt (DE)
(72) Erfinder: GEIßENHÖNER, Martin, 85055 Ingolstadt (DE); KRUSE, Alexander, 85051 Ingolstadt (DE); BAUER, Martin, 85053 Ingolstadt (DE); MUIGG, Andreas, 6150 Steinach (AT)
(74) Vertreter: Herbst, Matthias Heinz
(86) Internationale Anmeldenummer: PCT/EP2012/001642
(87) Internationale Veröffentlichungsnummer: WO 2012/146351

(56) Entgegenhaltungen:
- WO-A1-02/45991

## Beschreibung

Die Erfindung betrifft eine Bedieneinrichtung zur Steuerung des Betriebs eines einen Elektromotor umfassenden Kraftfahrzeugs bezüglich von wenigstens drei Betriebszuständen, wobei in einem ersten Betriebszustand das Kraftfahrzeug ausgeschaltet ist, in einem zweiten Betriebszustand das Kraftfahrzeug bei nicht ansteuerbarem Elektromotor angeschaltet ist und in einem dritten Betriebszustand das Kraftfahrzeug angeschaltet und der Elektromotor in Betrieb ist. Daneben betrifft die Erfindung ein Kraftfahrzeug mit einer derartigen Bedieneinrichtung.

Das Dokument WO 2002/45991 A1 offenbart den Oberbegriff des Anspruchs 1.

Bei Kraftfahrzeugen mit einem Verbrennungsmotor ist es bekannt, dass letztlich drei verschiedene Stellungen einer Bedieneinrichtung, beispielsweise eines Zündschlüssels, verwendet werden. Neben dem einfachen Anschalten des Kraftfahrzeugs, das bedeutet, die vom Fahrer bedienbaren Systeme wie Infotainment und dergleichen sind bedienbar, kann, beispielsweise durch das Weiterdrehen eines Zündschlüssels, der Verbrennungsmotor angelassen werden. Auch bei sonstigen moderneren Systemen, bei denen es beispielsweise ausreichend ist, dass der Fahrer den Schlüssel bei sich trägt und dieser dann über Funk automatisch erkannt wird, sind verschiedenste Bedieneinrichtungen bekannt, die sich an einem derartigen Konzept orientieren. Allgemein kann man sagen, dass bei Kraftfahrzeugen mit einem Verbrennungsmotor der Bedienerwunsch, beispielsweise Start des Kraftfahrzeugs, Abstellen des Kraftfahrzeugs und dergleichen, durch eine bewusste Bedienhandlung abgesetzt wird, die dann durch das Feedback des Verbrennungsmotors überprüft werden kann.

Bei Kraftfahrzeugen mit einem Elektromotor, insbesondere auch bei Hybridfahrzeugen, bei denen bei niedrigen Geschwindigkeiten zunächst nur der Elektromotor eingesetzt wird, fällt das akustische Feedback des Verbrennungsmotors weg, so dass die verschiedenen Betriebszustände des Kraftfahrzeugs für einen Fahrer nicht mehr klar unterscheidbar sind. Es existieren mithin eine Vielzahl von Betriebszuständen, die der Fahrer schlecht voneinander trennen kann.

Ein weiterer großer Nachteil bekannter Kraftfahrzeuge ist es, dass zum Starten des Kraftfahrzeugs, unabhängig von der im Automatikgetriebe eingelegten Fahrstufe, nicht nur das Bedienelement, mit dem das Kraftfahrzeug angeschaltet wird, betätigt werden muss, sondern gleichzeitig noch eine weitere Bedienhandlung durchgeführt werden muss, meist ein Treten der Bremse in Form des Bremspedals. Zudem sind derartige bekannte Bedieneinrichtungen letztlich unplausibel, nachdem es für den Fahrer letztlich unklar bleibt, ob der Elektromotor im Betrieb ist oder nicht, da das akustische Feedback nicht vorhanden ist. Hieraus resultieren auch weitere Gefahren, z. B. die Gefahr des Verlassens des Kraftfahrzeugs bei aktivem Antriebsmotor, wobei das Kraftfahrzeug sich selbsttätig in Bewegung setzen kann oder gar eine Batterieentladung aufgrund des dauerhaft aktivierten Kraftfahrzeugs auftritt.

Der Erfindung liegt daher die Aufgabe zugrunde, eine demgegenüber verbesserte Bedieneinrichtung sowie ein demgegenüber verbessertes Kraftfahrzeug zu schaffen, das eine intuitivere, einfachere und durchschaubarere Bedienung ermöglicht.

Zur Lösung dieser Aufgabe ist bei einer Bedieneinrichtung der eingangs genannten Art erfindungsgemäß vorgesehen, dass die Bedieneinrichtung ein Basisbedienelement zum An- und Ausschalten des Kraftfahrzeugs und ein Schaltbedienelement zur Auswahl einer Schaltstufe umfasst, wobei allein durch ein Signal des Basisbedienelements bei einem Anschalten des Kraftfahrzeugs das Kraftfahrzeug von dem ersten Betriebszustand in den zweiten Betriebszustand schaltbar ist und durch eine Betätigung des Schaltbedienelements durch Anwahl einer dem dritten Betriebszustand zugeordneten Schaltstufe von dem zweiten Betriebszustand in den dritten Betriebszustand geschaltet wird.

Erfindungsgemäß wird also ein gänzlich neues Bedienkonzept vorgeschlagen, bei dem zunächst durch nur ein dediziertes Bedienelement, im Falle eines funkbasierten Schlüssels, der durch den Fahrer nur bei sich getragen werden muss, beispielsweise ein Ein-Wege-Taster, das Kraftfahrzeug eingeschaltet und ausgeschaltet wird. Nachdem durch das Einschalten des Kraftfahrzeugs dieses niemals in einen Zustand überführt wird, in dem der Elektromotor durch Bedienaktionen des Fahrers, insbesondere das Gaspedal, ansteuerbar ist oder selbst eine Antriebsleistung erbringt, ist einzig das Betätigen des Basisbedienelements ausreichend, um das Kraftfahrzeug anzuschalten. Es ist nicht mehr nötig, ein weiteres Bedienelement zu betätigen, so dass über das Basisbedienelement das Kraftfahrzeug angeschaltet werden kann, ohne dass gleichzeitig ein weiteres Bedienelement betätigt werden muss, insbesondere ohne dass gleichzeitig die Bremse in Form des Bremspedals getreten werden muss.

Durch Betätigung des Basisbedienelements und nur des Basisbedienelements zum Anschalten des Kraftfahrzeugs gelangt das Kraftfahrzeug also in den zweiten Betriebszustand, in dem der Elektromotor weder ansteuerbar ist noch bereits eine Antriebskraft für das Kraftfahrzeug weitergibt. In einer konkreten Ausgestaltung kann man also sagen, dass im zweiten Betriebszustand des Kraftfahrzeugs allein eine Park-Schaltstufe (P-Stufe) und eine Leerlauf-Schaltstufe (N-Stufe) aktiv sein können. Zwar ist es denkbar, dass in der N-Stufe, insbesondere bei mit Permanentmagneten versehenen Elektromotoren, der Elektromotor schon betriebsbereit ist, jedoch ist er selbstverständlich in jedem Fall ausgekuppelt, so dass er keine Bewegung des Kraftfahrzeugs hervorruft und über das Gaspedal auch nicht ansteuerbar ist. Mithin ist der durch das Betätigen des Basisbedienelements komfortabel erreichbare zweite Betriebszustand noch als sicher zu bezeichnen, so dass nicht weitere Bedienelemente zur Sicherheit mit abgefragt werden müssen.

Ein weiterer Vorteil das Basisbedienelements ist es, dass es eine klar verständliche und vermittelbare Bedeutung hat, nämlich den Kraftfahrzeugzuständen "angeschaltet" und "ausgeschaltet" zugeordnet ist. Dem Fahrer ist also klar, welche Veränderung er durch Betätigung des Basisbedienelements herbeiführt, so dass die verwirrende Vielfalt von Kraftfahrzeugzuständen reduziert ist.

Will der Fahrer dann tatsächlich losfahren, so ist es zusätzlich notwendig, noch das Schaltbedienelement, beispielsweise einen Schalthebel, zu nutzen, um eine Schaltstufe anzuwählen, die dem oben definierten dritten Betriebszustand des Kraftfahrzeugs zugeordnet ist, in dem der Elektromotor ansteuerbar und/oder in einem das Kraftfahrzeug antreibenden Zustand ist. Zu dieser Betätigung des Schaltbedienelements kann durchaus verlangt werden, ein weiteres Bedienelement zu betätigen, beispielsweise ein Bremspedal, um letztlich losfahren zu können. In der Summe ergibt sich also eine einfachere Bedienung zum Starten des Kraftfahrzeugs, nachdem im angeschalteten Zustand des Kraftfahrzeugs, also im zweiten Betriebszustand, der fahrbereite Zustand durch Einlegen einer Fahrstufe als Schaltstufe erreicht werden kann.

Der Fahrer kann also zwischen einem ausgeschalteten Kraftfahrzeug, in dem allenfalls für den Fahrer nicht wahrnehmbare Fahrzeugsysteme aktiv sind, beispielsweise die Schlüsselüberwachung, und einem angeschalteten Zustand des Kraftfahrzeugs, in dem (abgesehen vom Motor an sich) alles bedienbar ist, insbesondere also die Klimaanlage und/oder Infotainmentsysteme und/oder ein Navigationssystem bedient werden können. Weiter kann er abstrahieren, dass er nach dem Anschalten des Kraftfahrzeugs erst dann in einen fahrbereiten Zustand kommt, wenn er eine Fahrstufe einlegt.

In weiterer Ausgestaltung der vorliegenden Erfindung kann dabei vorgesehen sein, dass in dem Kraftfahrzeug als Schaltstufe eine Park-Schaltstufe und eine Leerlauf-Schaltstufe, die dem ersten und dem zweiten Betriebszustand zugeordnet sind, und wenigstens eine Vorwärtsfahrstufe und eine Rückwärtsfahrstufe vorgesehen sind, die dem dritten Betriebszustand zugeordnet sind. Wie bei einer Automatikschaltung üblich, sind als Schaltstufen zunächst eine Park-Schaltstufe und eine Leerlauf-Schaltstufe (oft auch als P-Schaltstufe und N-Schaltstufe benannt) vorgesehen, in denen bekannt ist, dass der Elektromotor nicht ansteuerbar ist. In der Park-Schaltstufe ist das Fahrzeug letztlich arretiert, das bedeutet, das Getriebe wird blockiert und/oder eine Handbremse, insbesondere eine elektrische Parkbremse, wird angezogen. Dabei ist es, worauf im Folgenden noch näher eingegangen werden wird, im Übrigen besonders vorteilhaft, wenn die Park-Schaltstufe durch das Anziehen einer allein vorgesehenen elektrischen Parkbremse realisiert wird. In der Park-Schaltstufe ist das Kraftfahrzeug also sicher abgestellt. Nichtsdestotrotz wird üblicherweise auch die Leerlauf-Schaltstufe im ausgeschalteten Kraftfahrzeug zugelassen, nachdem beispielsweise in Waschanlagen oder bei einem Abschleppvorgang ein Rollen des Kraftfahrzeugs weiter erlaubt sein soll, obwohl das Kraftfahrzeug ausgeschaltet ist. Dabei kann mit besonderem Vorteil vorgesehen sein, dass dann, wenn vor dem Anschalten des Kraftfahrzeugs die eingelegte Schaltstufe die Park-Schaltstufe oder die Leerlauf-Schaltstufe war, die eingelegte Schaltstufe auch beim Einschalten des Kraftfahrzeugs mittels des Basisbedienelements eingelegt bleibt, das bedeutet, die Park-Schaltstufe bzw. die Leerlauf-Schaltstufe bleibt beim Anschalten des Kraftfahrzeugs erhalten. Damit kommt es hier nicht zu Verwirrungen des Fahrers.

Ferner sind, wie bei Automatikschaltungen üblich, wenigstens eine Vorwärtsfahrstufe (häufig auch Drive-Fahrstufe bzw. D-Fahrstufe genannt) und eine Rückwärtsfahrstufe (R-Fahrstufe) vorhanden, die dem fahrbereiten Kraftfahrzeug und mithin dem dritten Betriebszustand zugeordnet sind. Wird also bei angeschaltetem Kraftfahrzeug in die Vorwärtsfahrstufe oder die Rückwärtsfahrstufe geschaltet, gegebenenfalls unter gleichzeitigem Niederdrücken des Bremspedals, so wird in den dritten Betriebszustand gewechselt. Das Kraftfahrzeug ist dann fahrbereit.

Es sei an dieser Stelle nochmals deutlich hervorgehoben, dass das Kraftfahrzeug beim Anschalten nur in der Park-Schaltstufe oder der Leerlauf-Schaltstufe befindlich sein kann.

In weiterer, besonders vorteilhafter Ausgestaltung der vorliegenden Erfindung kann vorgesehen sein, dass das Schaltbedienelement als ein Schalthebel ausgebildet ist, der wenigstens beim Schalten in eine dem dritten Betriebszustand zugeordnete Schaltstufe in eine Grundstellung, insbesondere eine die Leerlauf-Schaltstufe anzeigende Stellung, zurückkehrend ausgebildet ist. Es kann also beispielsweise ein sogenannter "tippender", also nicht rastierender Schalthebel vorgesehen sein, der in eine Grundstellung zurückkehrt. Auf diese Weise treten auch keinerlei Probleme oder Verwirrungen auf, wenn der Schalthebel noch in einer dem dritten Betriebszustand zugeordneten Schaltstufe verrastiert bliebe. Diese Ausgestaltung lässt sich besonders vorteilhaft mit einer Ausgestaltung kombinieren, in der die Park-Schaltstufe nicht mehr über das Schaltbedienelement gewählt wird, sondern beispielsweise über einen zusätzlichen Taster oder ein sonstiges Zwei-Wege-Bedienelement. Dann kann das tippende Schaltbedienelement nach Art einer Tiptronic-Schaltung benutzt werden, um zwischen der Leerlauf-Schaltstufe und den Fahrstufen zu schalten, während die Sicherung des Kraftfahrzeugs, ähnlich wie es bei älteren Kraftfahrzeugen durch die Handbremse der Fall war, über das Park-Bedienelement, welches insbesondere als Zwei-Wege-Bedienelement ausgebildet ist, erfolgt. Dies kann mit einer Ausgestaltung kombiniert werden, in der die Park-Schaltstufe durch eine elektrische Parkbremse (EPB) realisiert wird. Das bedeutet, es liegt keine doppelte Sicherung des Kraftfahrzeugs durch konkurrierende Systeme mehr vor, nachdem die Park-Schaltstufe als Möglichkeit zum sicheren Abstellen des Kraftfahrzeugs als zentrales Sicherungssystem durch das Anziehen der EPB und ein eigenes, dediziertes Park-Bedienelement realisiert wird.

Wie bereits erwähnt, kann es aus Sicherheitsgründen sinnvoll sein, dass zum Schalten in eine dem dritten Betriebszustand zugeordnete Fahrstufe gleichzeitig ein Bremspedal betätigt werden muss. Solche Sicherungen werden häufig verlangt, wenn das Kraftfahrzeug in einen fahrbereiten Zustand gebracht werden soll.

In weiterer vorteilhafter Ausgestaltung der vorliegenden Erfindung kann vorgesehen sein, dass die Bedieneinrichtung wenigstens eine Basisanzeigevorrichtung, insbesondere eine in das Basisbedienelement integrierte Anzeigevorrichtung, zur Anzeige eines angeschalteten oder ausgeschalteten Kraftfahrzeugs umfasst. Mit besonderem Vorteil unmittelbar am Basisbedienelement selbst erhält der Fahrer mithin ein Feedback darüber, ob sich das Kraftfahrzeug in einem angeschalteten oder in einem ausgeschalteten Zustand befindet. Dies kann beispielsweise durch eine entsprechende rote oder grüne Hinterleuchtung realisiert werden, denkbar sind jedoch auch hinterleuchtete Texte oder sonstige optische Anzeigen. Damit wird dem Fahrer ein klares Feedback über die Betriebszustände des Kraftfahrzeugs gegeben, vorliegend hauptsächlich bezüglich dem angeschalteten oder dem abgeschalteten Zustand des Kraftfahrzeugs.

Zusätzlich oder alternativ kann vorgesehen sein, dass die Bedieneinrichtung wenigstens eine Leistungsanzeigevorrichtung umfasst, die zur Anzeige eines Leistungsniveaus des Kraftfahrzeugs in Abhängigkeit des Anschaltzustands des Kraftfahrzeugs und/oder einer eingelegten Schaltstufe ausgebildet ist. Auch hierdurch wird eine deutliche Verbesserung der Information des Fahrers erreicht. In konkreter, zweckmäßiger Ausgestaltung der Leistungsanzeigevorrichtung kann diese zur Anzeige von drei Leistungsniveaus ausgebildet sein, wobei das erste Leistungsniveau dem ersten Betriebszustand entspricht, das zweite Leistungsniveau dem angeschalteten Kraftfahrzeug bei nicht betriebsbereitem, insbesondere nicht bestromten Elektromotor und das dritte Leistungsniveau dem angeschalteten Kraftfahrzeug mit betriebsbereitem Elektromotor entspricht. Ein derartiges "Powermeter", welches die verschiedenen Leistungsniveaus beispielsweise in rot oder gar keiner farblichen Kennzeichnung für das erste Leistungsniveau, in gelb für das zweite Leistungsniveau und in grün für das dritte Leistungsniveau wiedergeben kann, erhöht also die Verständlichkeit des Kraftfahrzeugzustands, insbesondere im Hinblick auf den Elektromotor, der häufig auch bereits in der Leerlauf-Schaltstufe schon aktiv geschaltet ist, insbesondere dann, wenn ein Nullmoment erforderlich ist. Zudem möchte man, insbesondere dann, wenn es zu einem "N-Durchgang", also zu einem Durchschalten durch die Leerlauf-schaltstufe, kommt, Latenzzeiten dadurch vermeiden, dass der Elektromotor kurzzeitig nicht betriebsbereit geschaltet ist. Drückt man mithin das Anzeigeprinzip der Leistungsanzeigevorrichtung dieser speziellen Ausführungsform durch die verschiedenen möglichen Schaltstufen aus, so gilt grundsätzlich, wenn das Kraftfahrzeug gänzlich ausgeschaltet ist, dass keine Leistung angezeigt wird. Ist das Kraftfahrzeug angeschaltet und die Park-Schaltstufe ist aktiv, wird gelb für einen mittleren Leistungsverbrauch angezeigt. Ist das Kraftfahrzeug angeschaltet und die Leerlauf-Schaltstufe, eine Vorwärtsfahrstufe oder die Rückwärtsfahrstufe sind aktiv, wird angezeigt, dass das Kraftfahrzeug auf maximaler Leistung ist.

Wie bereits erwähnt, kann vorgesehen sein, dass ein Park-Bedienelement zum Aktivieren und/oder Deaktivieren der Park-Schaltstufe vorgesehen ist. Wie bereits erwähnt, lässt sich eine derartige Ausgestaltung besonders vorteilhaft dann realisieren, wenn die Park-Schaltstufe durch eine elektrische Parkbremse realisiert wird und das Schaltbedienelement keine Schaltmöglichkeit für die Park-Schaltstufe aufweist. Dabei sei an dieser Stelle noch angemerkt, dass auch mehrere Park-Bedienelemente vorgesehen sein können, beispielsweise ein beispielsweise einer Handbremse nachempfundener Hebel und ein beispielsweise seitlich des Hebels angeordneter Schalter.

Ferner kann vorgesehen sein, dass beim Lösen der Park-Schaltstufe im zweiten Betriebszustand in eine Leerlauf-Schaltstufe geschaltet wird, insbesondere jedoch nur bei gleichzeitiger Betätigung eines Bremsbedienelements, insbesondere des Bremspedals. Auch bei dem Lösen der Park-Schaltstufe kann mithin aus Sicherheitsgründen gefordert werden, dass gleichzeitig ein Bremspedal getreten wird oder dergleichen.

Das Verhalten der Bedieneinrichtung beim Ausschalten des Kraftfahrzeugs sollte im Wesentlichen so gewählt werden, dass auf den aktuellen Zustand des Kraftfahrzeugs genauso geachtet wird wie darauf, dass auf nachvollziehbare Weise im folgenden ersten Betriebszustand eine Park-Schaltstufe oder eine Leerlauf-Schaltstufe eingelegt wird. In konkreter Ausgestaltung der vorliegenden Erfindung kann mithin vorgesehen sein, dass bei einem Signal des Basisbedienelements zum Ausschalten des Kraftfahrzeugs
- wenn sich das Kraftfahrzeug im dritten Betriebszustand befindet und unbewegt ist, das Kraftfahrzeug in den ersten Betriebszustand und/oder einen dem ersten Betriebszustand vorgeschalteten Zwischenzustand mit einer eingelegten Park-Schaltstufe und/oder einer angezogenen elektrischen Parkbremse schaltbar ist,
- wenn sich das Kraftfahrzeug im dritten Betriebszustand befindet und bewegt ist, insbesondere nur bei einem länger andauernden und/oder mehrmals in einer vorbestimmten Zeitspanne wiederholten Signal, das Kraftfahrzeug mit bis zum Stillstand des Kraftfahrzeugs aktiver Bremse und Lenkung in den ersten Betriebszustand und/oder einen dem ersten Betriebszustand vorgeschalteten Zwischenzustand mit einer eingelegten Leerlauf-Schaltstufe schaltbar ist, und
- wenn sich das Kraftfahrzeug in dem zweiten Betriebszustand befindet, das Kraftfahrzeug unter Aufrechterhaltung einer eingelegten Schaltstufe, insbesondere der Leerlauf-Schaltstufe und der Park-Schaltstufe, in den ersten Betriebszustand und/oder einen dem ersten Betriebszustand vorgeschalteten Zwischenzustand geschaltet wird.

Es kann mithin also ein den Komfort des Fahrers erhöhender Zwischenzustand vorgesehen werden, wobei in konkreter Ausgestaltung der vorliegenden Erfindung vorgesehen sein kann, dass als weiterer Betriebszustand des Kraftfahrzeugs der Zwischenzustand, in dem nicht alle Systeme des Kraftfahrzeugs angeschaltet sind, vorgesehen ist, wobei das Kraftfahrzeug aus dem Zwischenzustand in den ersten Betriebszustand mittels eines weiteren Bedienelements, insbesondere einer zu öffnenden Fahrertür, schaltbar ist. So kann bezüglich des Zwischenzustands beispielsweise vorgesehen sein, dass in dem Zwischenzustand zunächst noch Infotainment-Systeme bedient werden können, die Klimaanlage jedoch schon ausgeschaltet ist. Erst dann, wenn sich die Fahrertür öffnet und/oder die Fahrertür wieder schließt, wird das Kraftfahrzeug gänzlich in den ersten Betriebszustand übergeführt. Dies bietet dem Fahrer einen zusätzlichen Komfort, wenn er beispielsweise noch etwas im Infotainment-System zu Ende lesen möchte oder dergleichen, bevor er aussteigt. Erst mit dem Aussteigen zeigt er deutlich, dass das Kraftfahrzeug nun endgültig verlassen möchte und mithin das Kraftfahrzeug vollkommen abgeschaltet werden kann, mithin in den ersten Betriebszustand überführt werden kann.

Unabhängig von dem Vorsehen eines derartigen Zwischenzustandes existieren folglich verschiedene Möglichkeiten, das Kraftfahrzeug aus dem zweiten oder dritten Betriebszustand wieder in den ersten Betriebszustand zu überführen. Steht das Kraftfahrzeug still, wird es also gerade nicht gefahren, so kann durch Betätigen des Basisbedienelements das Kraftfahrzeug letztlich unmittelbar ausgeschaltet werden, wobei die aktuell eingelegte, dem ersten oder zweiten Betriebszustand entsprechende Schaltstufe beibehalten werden wird. Ist gerade eine Fahrstufe, die dem dritten Betriebszustand zugeordnet ist, eingelegt, so wird zweckmäßigerweise das Kraftfahrzeug gesichert, indem in die Park-Schaltstufe geschaltet wird, wenn das Kraftfahrzeug in den ersten Betriebszustand überführt wird. Es ist jedoch auch denkbar, das Kraftfahrzeug zu deaktivieren, also auszuschalten, während es sich gerade bewegt. Unter diesen Umständen ist es sinnvoll, eine höhere Anforderung an die Betätigung des Basisbedienelements zu stellen, so dass es beispielsweise für eine vorbestimmte Zeitspanne gedrückt gehalten werden muss und/oder innerhalb einer vorbestimmten Zeitspanne mehrfach betätigt werden muss, um das Kraftfahrzeug in den ersten Betriebszustand überzuführen, mithin auszuschalten. Dabei ist vorteilhafterweise vorgesehen, dass das Lenksystem und das Bremssystem dem Fahrer zunächst weiter zur Verfügung stehen und in die Leerlauf-Schaltstufe geschaltet wird. Das Lenksystem und das Bremssystem arbeiten also wie gewohnt, bis das Kraftfahrzeug zum Stillstand gekommen ist.

Neben der Bedieneinrichtung betrifft die vorliegende Erfindung auch ein Kraftfahrzeug mit einem Elektromotor und einer erfindungsgemäßen Bedieneinrichtung. Sämtliche Ausführungen bezüglich der erfindungsgemäßen Bedieneinrichtung lassen sich analog auf das erfindungsgemäße Kraftfahrzeug übertragen, mit dem folglich ebenso die Vorteile der erfindungsgemäßen Bedieneinrichtung erreicht werden können.

Ein solches Kraftfahrzeug kann, wie bereits näher ausgeführt wurde, vorzugsweise weiter dadurch gekennzeichnet sein, dass die Park-Schaltstufe über eine elektrische Parkbremse realisiert ist. Es sind mithin keine konkurrierenden Systeme vorhanden, um das Kraftfahrzeug in einem sicheren Zustand zu halten. In diesem Zusammenhang ist es zudem vorteilhaft, wenn ein Schaltbedienelement ohne eine Anwählmöglichkeit für die Park-Schaltstufe verwendet wird. Stattdessen kann, wie bereits beschrieben, ein Park-Bedienelement genutzt werden, beispielsweise ein Zwei-Wege-Bedienelement.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Kraftfahrzeugs,
- Fig. 2: ein Basisbedienelement der Bedieneinrichtung im ausgeschalteten Zustand,
- Fig. 3: das Basisbedienelement der Fig. 2 in angeschaltetem Zustand,
- Fig. 4: ein Schaltbedienelement und ein Park-Bedienelement,
- Fig. 5: mögliche Anzeigen einer Leistungsanzeigevorrichtung,
- Fig. 6: eine Umschaltmöglichkeiten darstellende Tabelle,
- Fig. 7: ein Bediendiagramm einer weiteren Ausführungsform einer erfindungsgemäßen Bedieneinrichtung, und
- Fig. 8: einen möglichen Bedienablaufplan.

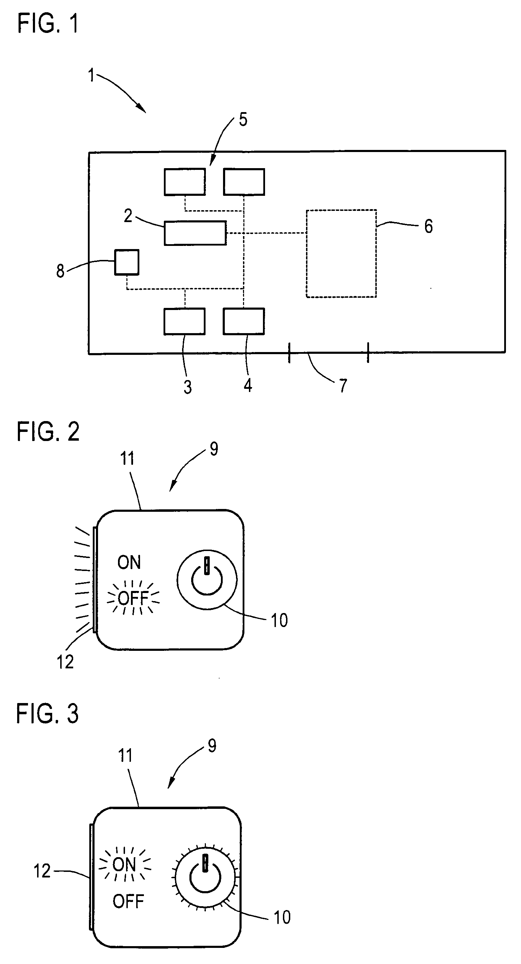

Fig. 1 zeigt eine Prinzipskizze eines erfindungsgemäßen Kraftfahrzeugs 1. Das Kraftfahrzeug 1 umfasst einen Elektromotor 2, ist also mithin ein Elektrofahrzeug oder ein Hybridfahrzeug. Neben einem Bremssystem 3 und einem Lenksystem 4 werden bei 5 auch weitere Fahrzeugsysteme angedeutet, beispielsweise eine Klimaanlage, ein Infotainment-System, ein Navigationssytem und dergleichen. Das Kraftfahrzeug umfasst ferner eine hier nur schematisch dargestellte erfindungsgemäße Bedieneinrichtung 6, über die der Betrieb des Kraftfahrzeugs 1 gesteuert werden kann. Eine Fahrertür 7 ermöglicht dem Fahrer das Ein- und Aussteigen.

Bei dem vorliegenden Kraftfahrzeug wird zudem in einer Park-Schaltstufe nicht das Getriebe blockiert, sondern die Park-Schaltstufe ist über eine elektrische Parkbremse 8 (EPB) realisiert.

Die Bedieneinrichtung 6 umfasst ein Basisbedienelement 9, welches zum An- und Ausschalten des Kraftfahrzeugs 1 dient und welches beispielsweise wie in den Fig. 2 und 3 dargestellt ausgebildet sein kann. Das Basisbedienelement 9 umfasst einen Ein-Wege-Taster 10, der vorliegend mit einer Basisanzeigevorrichtung 11 integriert ist. Befindet sich das Kraftfahrzeug 1 in einem ausgeschalteten Zustand, im Folgenden als erster Betriebszustand bezeichnet, wird durch die Anzeigevorrichtung 11 die Schrift "OFF" hinterleuchtet, zudem wird durch ein Anzeigeelement 12 auch seitlich ein rotes Leuchten erzeugt.

Wird der Taster 10 (bei detektiertem anwesenden, vom Fahrer mitgeführten Schlüssel) betätigt, wird das Kraftfahrzeug 1 angeschaltet, mithin in einen zweiten Betriebszustand überführt, in dem es allerdings noch nicht fahrbereit ist. Zum Überführen des Kraftfahrzeugs in den zweiten Betriebszustand, in dem der Elektromotor 2 noch nicht angesteuert werden kann, ist einzig das Signal des Basisbedienelements 9 zum Einschalten ausreichend, das bedeutet, es muss kein weiteres Bedienelement zusätzlich betätigt werden. Im zweiten Betriebszustand und auch im dritten, fahrbereitem Betriebszustand des Kraftfahrzeugs wird, wie in Fig. 3 dargestellt ist, der Taster 10 grün hinterleuchtet. Zudem wird auch die Schrift "ON" grün hervorgehoben.

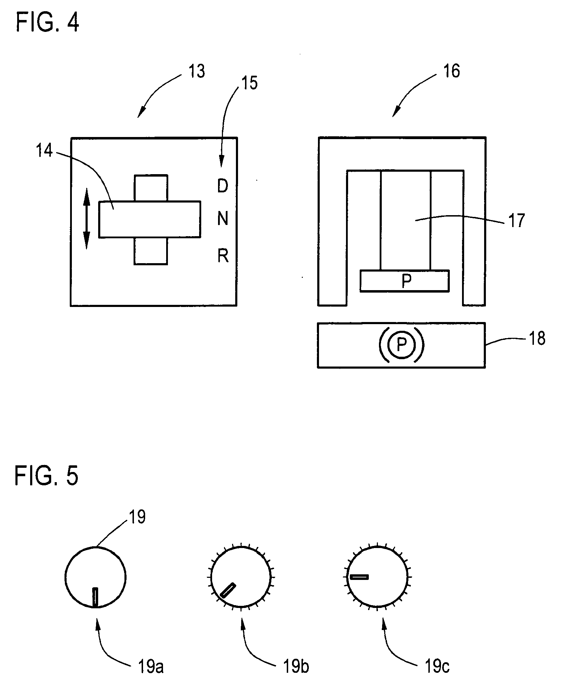

Fig. 4 zeigt als weitere Bedienelemente der Bedieneinrichtung 6 ein Schaltbedienelement 13, hier einen Schalthebel 14, der tippend ausgebildet ist, das bedeutet, er kehrt nach einem Schaltvorgang immer in eine Mittenstellung zurück, wobei die eingelegte Schaltstufe über eine Schaltanzeigevorrichtung 15 dargestellt wird. Es ist mithin eine Art Tiptronic-Schaltung gegeben. Allerdings ist über das Schaltbedienelement 13 die Park-Schaltstufe (P) nicht anwählbar. Nachdem die Funktionalität, wie bereits bezüglich der Fig. 1 beschrieben, mit der elektrischen Parkbremse 8 zusammengelegt ist, ist hierfür ein getrenntes Park-Bedienelement 16 vorgesehen, hier umfassend einen in einem Gehäuse eingeschlossenen Hebel 17, der zwischen zwei Stellungen bewegt werden kann, um die Park-Schaltstufe zu aktivieren und zu deaktivieren. Zur Anzeige der Park-Schaltstufe ist eine Park-Anzeigevorrichtung 18 vorgesehen, bei der ein Symbol hinterleuchtet wird, sobald die elektrische Parkbremse 8 angezogen ist, das Kraftfahrzeug 1 sich mithin in der Park-Schaltstufe befindet. Es sind jedoch auch Ausgestaltungen denkbar, in denen zusätzlich zu dem Hebel 17 ein weiteres Park-Bedienelement vorgesehen wird, beispielsweise ein Taster. Zum Lösen des Park-Bedienelementes, also zum Ausschalten der Park-Schaltstufe, muss zusätzlich noch das hier nicht näher gezeigte Bremspedal betätigt werden. Dies gilt auch, wenn aus dem zweiten Betriebszustand, dem im Übrigen die Leerlauf-Schaltstufe (N-Stufe) und die Park-Schaltstufe zugeordnet sind, in eine tatsächliche Fahrstufe als Schaltstufe geschaltet werden soll, insbesondere also eine Vorwärtsfahrstufe (D-Stufe) oder eine Rückwärts-Fahrstufe (R-Stufe). Mit dem Einlegen der dem dritten Betriebszustand zugeordneten Vorwärtsfahrstufe oder Rückwärtsfahrstufe wird im Übrigen auch in den dritten Betriebszustand des Kraftfahrzeug 1 geschaltet, in dem das Kraftfahrzeug fahrbereit ist, der Elektromotor 2 also betrieben wird und bedienbar ist.

Fig. 5 zeigt mehrere Anzeigezustände einer Leistungsanzeigevorrichtung 19, die ebenso einen Teil der Bedieneinrichtung 6 bildet. Der Zustand 19a zeigt an, dass das Kraftfahrzeug ausgeschaltet ist. Der Zustand 19b, gelb hinterleuchtet, ist eine Zwischenstellung, die anzeigt, dass das Kraftfahrzeug 1 zwar angeschaltet ist, der Elektromotor 2 allerdings noch nicht bestromt ist, wie dies vorliegend in der Park-Schaltstufe der Fall ist.

Der Zustand 19c, grün hinterleuchtet, zeigt an, dass die volle Leistung des Kraftfahrzeugs 1 zur Verfügung steht, mithin der Elektromotor 2 bestromt ist. Diese Anzeige wird erhalten, wenn das Kraftfahrzeug 1 angeschaltet ist und sich in der Leerlauf-Schaltstufe, einer Vorwärtsfahrstufe oder der Rückwärtsfahrstufe befindet.

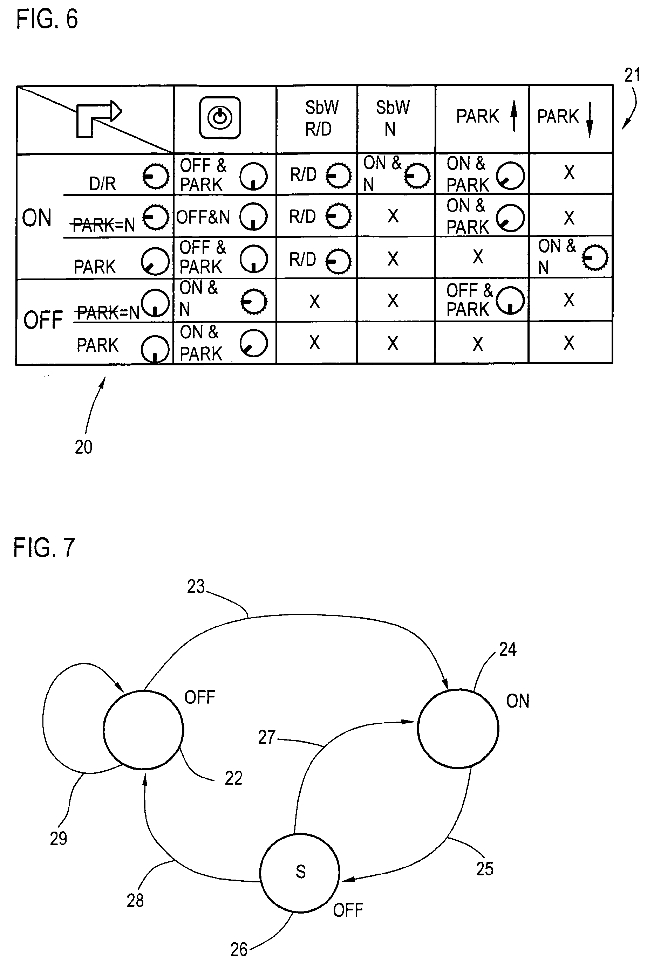

Fig. 6 zeigt nun in Form einer Übersicht, wie das Kraftfahrzeug 1 in einer Ausführungsform der Bedieneinrichtung 6 zu schalten ist. Dabei sind in der vertikalen Spalte 20 die Ausgangszustände des Kraftfahrzeugs 1 gezeigt, in der horizontalen Spalte 21 eine Bedienaktion über die Bedieneinrichtung 6. Zusätzlich sind immer noch die Anzeigen der Leistungsanzeigevorrichtung 19 dargestellt. Es bezeichnet dabei in Fig. 6:
- ON: ein eingeschaltetes Kraftfahrzeug 1,
- OFF: ein ausgeschaltetes Kraftfahrzeug 1,
- D/R: die Vorwärtsfahrstufe (D-Stufe) und die Rückwärtsfahrstufe (R-Stufe),
- N: die Leerlauf-Schaltstufe (N-Stufe),
- PARK: die aktive Park-Schaltstufe,
die nicht eingelegte Park-Schaltstufe (entspricht bei nicht gefahrenem Kraftfahrzeug 1 der Leerlauf-Schaltstufe),
- SbW: eine Betätigung des Schaltbedienelements,
- PARK ↑: ein Ziehen des Park-Bedienelements 19 (und somit das Anziehen der elektrischen Parkbremse 8),
und
- PARK ↓: das Lösen (Drücken) des Park-Bedienelements 19 (und somit das Lösen der elektrischen Parkbremse 8).

Dabei sei an dieser Stelle nochmals hervorgehoben, dass zusätzlich zum Betätigen des Schaltbedienelements 13 in eine Vorwärtsfahrstufe oder die Rückwärtsfahrstufe und auch zusätzlich zum Lösen der Park-Schaltstufe in diesem Ausführungsbeispiel eine Betätigung des Bremspedals erforderlich ist.

Ein "x" in Fig. 6 bedeutet, dass keine Zustandsänderung eintritt.

Dabei sei an dieser Stelle noch angemerkt, dass das für den Fall des Betätigens des Basisbedienelements 9 bei eingelegter Vorwärtsfahrstufe oder eingelegter Rückwärtsfahrstufe in Fig. 6 dargestellte Vorgehen für den Fall, dass sich das Kraftfahrzeug 1 gerade bewegt, noch modifiziert werden kann. So ist es möglich, dann vorzusehen, dass ein Ausschalten des Kraftfahrzeugs 1 nur bei einer Betätigung des Tasters 10 für eine vorbestimmte Zeitdauer ("long-push"), beispielsweise wenigstens zwei Sekunden, und/oder bei einem mehrfachen Betätigen des Tasters 10 innerhalb einer vorbestimmten Zeitspanne als Bedienaktion anerkannt wird. Dann wird jedoch nicht sofort, wie in Fig. 6 dargestellt, das Kraftfahrzeug ausgeschaltet und in den Park-Schaltzustand verbracht, sondern solange sich das Kraftfahrzeug 1 noch bewegt, wird es zwar abgeschaltet, es wird jedoch die Leerlauf-Schaltstufe eingelegt und das Bremssystem 3 und das Lenksystem 4 bleiben aktiv, bis der Stillstand erreicht ist. Erst dann wird automatisch die Park-Schaltstufe eingelegt.

Es sei ferner noch angemerkt, dass das hier dargestellte Bedienkonzept auch mit einer sogenannten Autopark-Funktion kombiniert werden kann. Wird dann die Fahrertür 7 geöffnet, während das Kraftfahrzeug 1 angeschaltet ist und die Leerlauf-Schaltstufe oder eine Fahrstufe eingelegt ist, wird das Kraftfahrzeug 1 automatisch in den Park-Schaltzustand verbracht. Die elektrische Parkbremse schließt. Es ist jedoch möglich, über das Schaltbedienelement 13 wieder eine Fahrstufe einzulegen, um mit offener Tür rangieren zu können.

Fig. 7 zeigt nun ein schematisches Ablaufdiagramm bei der Bedienung des Kraftfahrzeugs 1 mittels der Bedieneinrichtung 6, wenn in einem weiteren Ausführungsbeispiel ein zusätzlicher Zwischenzustand S vorgesehen ist, in dem nur wenige Fahrzeugsysteme 5 bedienbar sind, beispielsweise nur das Infotainment-System. Ist das Kraftfahrzeug 1 abgeschaltet, Kreis 22, führt eine Betätigung des Basisbedienelements 9 gemäß dem Pfeil 23 wie bekannt in den zweiten Betriebszustand, Kreis 24, aus dem dann, wie bereits beschrieben, beispielsweise in den dritten Betriebszustand geschaltet werden kann und dergleichen. Dies alles soll weiterhin durch den Kreis 24 erfasst sein. Das Kraftfahrzeug 1 ist angeschaltet, das bedeutet, alle Fahrzeugsysteme (abgesehen vom Elektromotor im zweiten Betriebszustand) stehen bedienbar zur Verfügung.

Wird nun jedoch wieder das Basisbedienelement 9 betätigt, Pfeil 25, gelangt man nicht sofort in den ersten Betriebszustand, sondern zunächst in einen durch den Kreis 26 symbolisierten Zwischenzustand. In diesem Zwischenzustand sind einige Systeme, beispielsweise die Klimaanlage, nicht bedienbar, doch das Infotainment-System läuft noch weiter. Nichtsdestotrotz wird dieser Zustand bereits als "OFF" zur Kenntnis gebracht. Betätigt man im Zwischenzustand wiederum das Basisbedienelement 9, Pfeil 27, wird das Kraftfahrzeug 1 wieder in den zweiten Betriebszustand überführt, mithin angeschaltet.

Von dem Zwischenzustand zum ersten Betriebszustand, also dem ausgeschalteten Kraftfahrzeug 1, gelangt man vorliegend, indem die Fahrertür 7 geöffnet wird, vgl. Pfeil 28. Wird die Fahrertür 7 dann erneut geöffnet, Pfeil 29, ändert sich nichts.

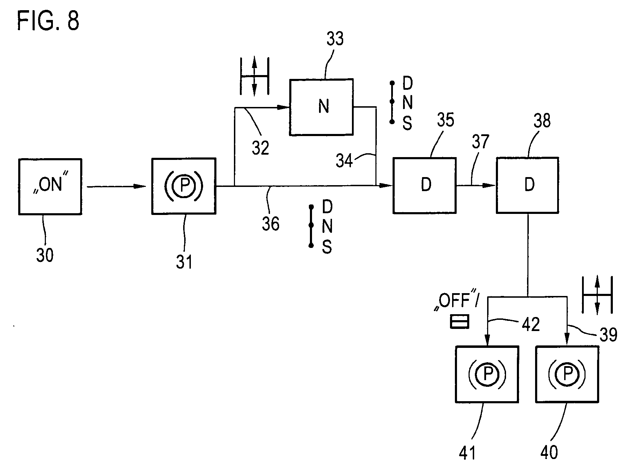

Fig. 8 zeigt schließlich ein Ablaufdiagramm einer möglichen Bedienung über die erfindungsgemäße Bedieneinrichtung 6. Es wird davon ausgegangen, dass zunächst das Kraftfahrzeug 1 über das Basisbedienelement 9 angeschaltet wird, Kasten 30, so dass sich das Kraftfahrzeug 1 zunächst in der Park-Schaltstufe 31 im zweiten Betriebszustand befindet, Kasten 31. Betätigt der Fahrer nun, gemeinsam mit dem Bremspedal, das Park-Bedienelement 16 gemäß Pfeil 32, gelangt er in den rollfähigen Zustand gemäß Kasten 33, in dem die Leerlauf-Schaltstufe eingelegt ist. Von hier aus kann er durch Betätigen des Schaltbedienelements 13, Pfeil 34, beispielsweise eine Vorwärtsfahrstufe gemäß Kasten 35 einlegen, wobei allerdings wiederum gleichzeitig das Bremspedal zu treten ist. Direkt vom Zustand im Kasten 31 zu dem Zustand im Kasten 35 kann gemäß des Pfeils 36 ebenfalls gelangt werden, wenn gleich das Schaltbedienelement 13 verwendet wird.

In Kasten 35 ist also eine Fahrstufe eingelegt, das Kraftfahrzeug 1 ist fahrbereit. Der Fahrer kann nun gemäß Pfeil 37 anfahren und verbleibt dabei selbstverständlich während des Fahrens in der Fahrstufe, Kasten 38. Möchte der Fahrer seine Fahrt beenden, kann er anhalten und das Park-Bedienelement 16, Pfeil 39, ziehen. Es wird dann die Park-Schaltstufe eingelegt, das Kraftfahrzeug 1 ist sicher abgestellt, Kasten 40. Analog kann in die Park-Schaltstufe gemäß Kasten 41 auch über den Pfeil 42 gelangt werden, nämlich das Betätigen des Basisbedienelements 9 zum Ausschalten des Kraftfahrzeugs 1 oder das Öffnen der Fahrertür 7, wenn eine Autopark-Funktion gegeben ist.

## Patentansprüche

1. Bedieneinrichtung (6) zur Steuerung des Betriebs eines einen Elektromotor (2) umfassenden Kraftfahrzeugs (1) bezüglich von wenigstens drei Betriebszuständen, wobei in einem ersten Betriebszustand das Kraftfahrzeug (1) ausgeschaltet ist, in einem zweiten Betriebszustand das Kraftfahrzeug (1) bei nicht ansteuerbarem Elektromotor (2) angeschaltet ist und in einem dritten Betriebszustand das Kraftfahrzeug (1) angeschaltet und der Elektromotor (2) in Betrieb ist,
**dadurch gekennzeichnet,**
**dass** die Bedieneinrichtung (6) ein Basisbedienelement (9) zum An- und Ausschalten des Kraftfahrzeugs (1) und ein Schaltbedienelement (13) zur Auswahl einer Schaltstufe umfasst, wobei allein durch ein Signal des Basisbedienelements (9) bei einem Anschalten des Kraftfahrzeugs (1) das Kraftfahrzeug (1) von dem ersten Betriebszustand in den zweiten Betriebszustand schaltbar ist und durch eine Betätigung des Schaltbedienelements (13) durch Anwahl einer dem dritten Betriebszustand zugeordneten Schaltstufe von dem zweiten Bedienzustand in den dritten Bedienzustand geschaltet wird.

2. Bedienrichtung nach Anspruch 1,
**dadurch gekennzeichnet,**
**dass** in dem Kraftfahrzeug (1) als Schaltstufe eine Park-Schaltstufe und eine Leerlauf-Schaltstufe, die dem ersten und dem zweiten Betriebszustand zugeordnet sind, und wenigstens eine Vorwärtsfahrstufe und eine Rückwärtsfahrstufe vorgesehen sind, die dem dritten Betriebszustand zugeordnet sind.

3. Bedieneinrichtung nach Anspruch 1 oder 2,
**dadurch gekennzeichnet,**
**dass** das Schaltbedienelement (13) als ein Schalthebel (14) ausgebildet ist, der wenigstens beim Schalten in eine dem dritten Betriebzustand zugeordnete Schaltstufe in eine Grundstellung, insbesondere eine die Leerlauf-Schaltstufe anzeigende Stellung, zurückkehrend ausgebildet ist.

4. Bedieneinrichtung nach einem der vorangehenden Ansprüche,
**dadurch gekennzeichnet,**
**dass** zum Schalten in eine dem dritten Betriebszustand zugeordnete Schaltstufe gleichzeitig ein Bremspedal betätigt werden muss.

5. Bedieneinrichtung nach einem der vorangehenden Ansprüche,
**dadurch gekennzeichnet,**
**dass** sie wenigstens eine Basisanzeigevorrichtung (11), insbesondere eine in das Basisbedienelement (9) integrierte Anzeigevorrichtung (11), zur Anzeige eines angeschalteten oder ausgeschalteten Kraftfahrzeugs (1) umfasst.

6. Bedieneinrichtung nach einem der vorangehenden Ansprüche,
**dadurch gekennzeichnet,**
**dass** sie wenigstens eine Leistungsanzeigevorrichtung (19) umfasst, die zur Anzeige eines Leistungsniveaus des Kraftfahrzeugs (1) in Abhängigkeit des Anschaltzustands des Kraftfahrzeugs (1) und/oder einer eingelegten Schaltstufe ausgebildet ist.

7. Bedieneinrichtung nach Anspruch 6,
**dadurch gekennzeichnet,**
**dass** die Leistungsanzeigevorrichtung (19) zur Anzeige von drei Leistungsniveaus ausgebildet ist, wobei das erste Leistungsniveau dem ersten Betriebszustand entspricht, das zweite Leistungsniveau dem angeschalteten Kraftfahrzeug (1) bei nicht betriebsbereitem, insbesondere nicht bestromten Elektromotor (2) und das dritte Leistungsniveau dem angeschalteten Kraftfahrzeug (1) mit betriebsbereitem Elektromotor (2) entspricht.

8. Bedieneinrichtung nach einem der vorangehenden Ansprüche,
**dadurch gekennzeichnet,**
**dass** ein Park-Bedienelement (16) zum Aktivieren und/oder Deaktivieren der Park-Schaltstufe vorgesehen ist.

9. Bedienrichtung nach einem der vorangehenden Ansprüche,
**dadurch gekennzeichnet,**
**dass** beim Lösen der Park-Schaltstufe im zweiten Betriebszustand in eine Leerlauf-Schaltstufe geschaltet wird, insbesondere jedoch nur bei gleichzeitiger Betätigung eines Bremsbedienelements, insbesondere das Bremspedals.

10. Bedieneinrichtung nach einem der vorangehenden Ansprüche,
**dadurch gekennzeichnet,**
**dass** bei einem Signal des Basisbedienelements (9) zum Ausschalten des Kraftfahrzeugs (1)
- wenn sich das Kraftfahrzeug (1) im dritten Betriebszustand befindet und unbewegt ist, das Kraftfahrzeug (1) in den ersten Betriebszustand und/oder einen dem ersten Betriebszustand vorgeschalteten Zwischenzustand mit einer eingelegten Park-Schaltstufe und/oder einer angezogenen elektrischen Parkbremse (8) schaltbar ist,
- wenn sich das Kraftfahrzeug (1) im dritten Betriebszustand befindet und bewegt ist, insbesondere nur bei einem länger andauernden und/oder mehrmals in einer vorbestimmten Zeitspanne wiederholten Signal, das Kraftfahrzeug (1) mit bis zum Stillstand des Kraftfahrzeugs (1) aktiver Bremse (3) und Lenkung (4) in den ersten Betriebszustand und/oder einen dem ersten Betriebszustand vorgeschalteten Zwischenzustand mit einer eingelegten Leerlauf-Schaltstufe schaltbar ist, und
- wenn sich das Kraftfahrzeug (1) in dem zweiten Betriebszustand befindet, das Kraftfahrzeug (1) unter Aufrechterhaltung einer eingelegten Schaltstufe, insbesondere der Leerlauf-Schaltstufe und der Park-Schaltstufe, in den ersten Betriebszustand und/oder einen dem ersten Betriebszustand vorgeschalteten Zwischenzustand geschaltet wird.

11. Bedienungseinrichtung nach einem Anspruch 10,
**dadurch gekennzeichnet,**
**dass** als weiterer Betriebszustand des Kraftfahrzeugs (1) der Zwischenzustand, in dem nicht alle Systeme des Kraftfahrzeugs (1) angeschaltet sind, vorgesehen ist, wobei das Kraftfahrzeug (1) aus dem Zwischenzustand in den ersten Betriebszustand mittels eines weiteren Bedienelements, insbesondere einer zu öffnenden Fahrertür (7), schaltbar ist.

12. Kraftfahrzeug (1) mit einem Elektromotor (2) und einer Bedieneinrichtung (6) nach einem der vorangehenden Ansprüche.

13. Kraftfahrzeug nach Anspruch 12,
**dadurch gekennzeichnet,**
**dass** die Park-Schaltstufe über eine elektrische Parkbremse (8) realisiert ist.

14. Kraftfahrzeug nach Anspruch 13,
**dadurch gekennzeichnet,**
**dass** ein Schalthebel (14) ohne eine Anwählmöglichkeit für die Park-Schaltstufe verwendet wird.

## Claims

1. Operating device (6) for controlling the operation of a motor vehicle (1) containing an electric motor (2) with regard to at least three operating states, wherein in a first operating state the motor vehicle (1) is switched off, in a second operating state the motor vehicle (1) is switched on and the electric motor (2) cannot be triggered, and in a third operating state the motor vehicle (1) is switched on and the electric motor (2) is in operation, **characterised in that** the operating device (6) includes a base operating element (9) for switching the motor vehicle (1) on and off and a switching operating element (13) for selecting a switching stage, wherein simply by a signal from the base operating element (9) when switching the motor vehicle (1) on the motor vehicle (1) can be switched from the first operating state to the second operating state and by actuating the switching operating element (13) is switched from the second operating state to the third operating state by selecting a switching stage associated with the third operating state.

2. Operating device according to claim 1,
**characterised in that**
a parking switching stage and an idling switching stage are provided as switching stage in the motor vehicle (1) that are associated with the first and the second operating states, and at least one forward movement stage and a reverse movement stage are provided that are associated with the third operating state.

3. Operating device according to claim 1 or 2,
**characterised in that**
the switching operating element (13) is configured as a switch lever (14), which at least when switching to a switching stage associated with the third operating state is configured to return to a normal position, in particular a position indicating the idling switching stage.

4. Operating device according to any one of the preceding claims,
**characterised in that**
in order to switch to a switching stage associated with the third operating state, a brake pedal must be actuated at the same time.

5. Operating device according to any one of the preceding claims,
**characterised in that**
it includes at least one base display device (11), in particular a display device (11) incorporated in the base operating element (9), to indicate whether a motor vehicle (1) is switched on or off.

6. Operating device according to any one of the preceding claims,
**characterised in that**
it includes at least one power display device (19), which is configured to display a power level of the motor vehicle (1) depending on the switching state of the motor vehicle (1) and/or an applied switching stage.

7. Operating device according to claim 6,
**characterised in that**
the power display device (19) is configured to display three power levels, in which the first power level corresponds to the first operating state, the second power level corresponds to the motor vehicle (1) when switched on and the electric motor (2) is not operationally ready, in particular is not supplied with electric current, and the third power level corresponds to the motor vehicle (1) when switched on and the electric motor (2) is operationally ready.

8. Operating device according to any one of the preceding claims,
**characterised in that**
a parking operating element (16) is provided for activating and/or deactivating the parking switching stage.

9. Operating device according to any one of the preceding claims,
**characterised in that**
on releasing the parking switching stage in the second operating state the vehicle is switched to an idling switching stage, in particular however only by simultaneously actuating a brake operating element, in particular the brake pedal.

10. Operating device according to any one of the preceding claims,
**characterised in that**
with a signal from the base operating element (9) to switch off the motor vehicle (1)
- if the motor vehicle (1) is in the third operating state and is not moving, the motor vehicle (1) can be switched to the first operating state and/or to an intermediate state connected in series with the first operating state, with an engaged parking switching stage and/or an applied electric parking brake (8)
- if the motor vehicle (1) is in the third operating state and is moving, in particular only if there is a fairly long signal and/or multiply repeated signal in a predetermined time, the motor vehicle (1) can be switched by active braking (3) and steering (4) to the first operating state and/or to an intermediate state connected in series with the first operating state with an engaged idling switching stage until the motor vehicle comes to a stop, and
- if the motor vehicle (1) is in the second operating state, the motor vehicle (1) is switched while maintaining an engaged switching stage, in particular the idling switching stage and the parking switching stage, to the first operating state and/or an intermediate state connected in series with the first operating state.

11. Operating device according to claim 10,
**characterised in that**
the intermediate state in which not all systems of the motor vehicle (1) are switched on is provided as a further operating state of the motor vehicle (1), wherein the motor vehicle (1) can be switched from the intermediate state to the first operating state by means of a further operating element, in particular a driver's door (7) that has to be opened.

12. Motor vehicle (1) with an electric motor (2) and an operating device (6) according to one of the preceding claims.

13. Motor vehicle according to claim 12,
**characterised in that**
the parking switching stage is effected via an electric parking brake (8).

14. Motor vehicle according to claim 13,
**characterised in that**
a switching lever (14) is used without the possibility of selecting the parking switching stage.

## Revendications

1. Dispositif de commande (6) pour la commande du fonctionnement d'un véhicule automobile (1) comprenant un moteur électrique (2) selon au moins trois états de fonctionnement, dispositif de commande tel que, dans un premier état de fonctionnement, le véhicule automobile (1) est arrêté, dans un deuxième état de fonctionnement, le véhicule automobile (1) est allumé mais avec un moteur électrique (2) qui ne peut pas être commandé et, dans un troisième état de fonctionnement, le véhicule automobile (1) est allumé et le moteur électrique (2) fonctionne,
**caractérisé en ce que** le dispositif de commande (6) comprend un élément de commande de base (9) pour l'allumage et l'arrêt du véhicule automobile (1) et un élément de commande de commutation (13) pour la sélection d'une position de commutation, le véhicule automobile (1) pouvant être commuté du premier état de fonctionnement au deuxième état de fonctionnement exclusivement par un signal de l'élément de commande de base (9) avec un allumage du véhicule automobile (1) et étant commuté du deuxième état de fonctionnement au troisième état de fonctionnement par un actionnement de l'élément de commande de commutation (13) avec la sélection d'une position de commutation associée au troisième état de fonctionnement.

2. Dispositif de commande selon la revendication 1, **caractérisé en ce que**, dans le véhicule automobile (1), il est prévu comme position de commutation : une position de commutation de stationnement et une position de commutation de marche à vide, qui sont associées au premier et au deuxième état de fonctionnement, et au moins une position de marche avant et une position de marche arrière, qui sont associées au troisième état de fonctionnement.

3. Dispositif de commande selon la revendication 1 ou 2, **caractérisé en ce que** l'élément de commande de commutation (13) est conçu comme un levier de commutation (14) qui, au moins lors de la commutation dans une position de commutation associée au troisième état de fonctionnement, est conçu de manière à revenir dans une position de base, notamment une position indiquant la position de commutation de marche à vide.

4. Dispositif de commande selon l'une des revendications précédentes, **caractérisé en ce que**, pour la commutation dans une position de commutation associée au troisième état de fonctionnement, une pédale de freinage doit être actionnée en même temps.

5. Dispositif de commande selon l'une des revendications précédentes,
**caractérisé en ce qu'**il comprend au moins un dispositif indicateur de base (11), notamment un dispositif indicateur (11) intégré dans l'élément de commande de base (9), pour indiquer un véhicule automobile (1) allumé ou arrêté.

6. Dispositif de commande selon l'une des revendications précédentes,
**caractérisé en ce qu'**il comprend au moins un dispositif indicateur de puissance (19) qui est conçu pour indiquer un niveau de puissance du véhicule automobile (1) en fonction de l'état d'allumage du véhicule automobile (1) et/ou d'une position de commutation enclenchée.

7. Dispositif de commande selon la revendication 6, **caractérisé en ce que** le dispositif indicateur de puissance (19) est conçu pour indiquer un niveau parmi trois niveaux de puissance, le premier niveau de puissance correspondant au premier état de fonctionnement, le deuxième niveau de puissance correspondant au véhicule automobile (1) allumé mais avec un moteur électrique (2) qui n'est pas prêt à fonctionner et notamment qui n'est pas alimenté en courant et le troisième niveau de puissance correspondant au véhicule automobile (1) allumé avec un moteur électrique (2) qui est prêt à fonctionner.

8. Dispositif de commande selon l'une des revendications précédentes,
**caractérisé en ce qu'**un élément de commande de stationnement (16) est prévu pour activer et/ou désactiver la position de commutation de stationnement.

9. Dispositif de commande selon l'une des revendications précédentes,
**caractérisé en ce que**, lors de la libération de la position de commutation de stationnement dans le deuxième état de fonctionnement, une position de commutation de marche à vide est commutée, mais notamment seulement si un élément de commande de freinage, notamment la pédale de freinage, est actionné en même temps.

10. Dispositif de commande selon l'une des revendications précédentes,
**caractérisé en ce que**,
en présence d'un signal de l'élément de commande de base (9) pour arrêter le véhicule automobile (1),
- si le véhicule automobile (1) se trouve dans le troisième état de fonctionnement et est immobile, le véhicule automobile (1) peut être commuté dans le premier état de fonctionnement et/ou dans un état intermédiaire commuté avant le premier état de fonctionnement avec une position de commutation de stationnement enclenchée et/ou avec un frein de stationnement électrique (8) enclenché,
- si le véhicule automobile (1) se trouve dans le troisième état de fonctionnement et est mobile, notamment seulement en présence d'un signal qui dure plus longtemps et/ou qui se répète plusieurs fois dans un laps de temps prédéterminé, le véhicule automobile (1) avec un frein (3) et une direction (4) qui sont actifs jusqu'à l'immobilisation du véhicule automobile (1) peut être commuté dans le premier état de fonctionnement et/ou dans un état intermédiaire commuté avant le premier état de fonctionnement avec une position de commutation de marche à vide enclenchée, et
- si le véhicule automobile (1) se trouve dans le deuxième état de fonctionnement, le véhicule automobile (1) est commuté, en conservant une position de commutation enclenchée, notamment la position de commutation de marche à vide et la position de commutation de stationnement, dans le premier état de fonctionnement et/ou dans un état intermédiaire commuté avant le premier état de fonctionnement.

11. Dispositif de commande selon la revendication 10, **caractérisé en ce que**, comme autre état de fonctionnement du véhicule automobile (1), il est prévu l'état intermédiaire dans lequel tous les systèmes du véhicule automobile (1) ne sont pas allumés, le véhicule automobile (1) pouvant être commuté de l'état intermédiaire au premier état de fonctionnement au moyen d'un autre élément de commande, notamment d'une porte de conducteur (7) à ouvrir.

12. Véhicule automobile (1) avec un moteur électrique (2) et avec un dispositif de commande (6) selon l'une des revendications précédentes.

13. Véhicule automobile selon la revendication 12, **caractérisé en ce que** la position de commutation de stationnement est réalisée par l'intermédiaire d'un frein de stationnement électrique (8).

14. Véhicule automobile selon la revendication 13, **caractérisé en ce qu'**un levier de commutation (14) sans possibilité de sélection de la position de commutation de stationnement est utilisé.
